# DEMANDE DE BREVET EUROPEEN

(11) **EP 1 906 711 A1**
(43) Date de publication de la demande: **02.04.2008**
(21) Numéro de dépôt: 07117267.0
(22) Date de dépôt: 26.09.2007
(51) Int. Cl.: H05B 33/08

(54) **Dispositif de contrôle d'une pluralité de charges comme des sources lumineuses et dispositif d'éclairage et/ou de signalisation de véhicule incorporant un tel dispositif de contrôle**

(30) Priorité: 28.09.2006 FR 0608542
(71) Demandeur: VALEO VISION, 93012 Bobigny (FR)
(72) Inventeur: Nicolai, Jean-Marc, 92400 COURBEVOIE (FR); Richard, Stéphane, 93700, DRANCY (FR); Duarte, Marc, 93250 VILLEMOMBLE (FR); Seif, Lothar, 89100 NAILLY (FR); Neytchef, Eugeniy, 77870 VULAINES SUR SEINE (FR)
(74) Mandataire: Renous Chan, Véronique

(57) **Abrégé**

Dispositif de contrôle d'une pluralité de charges, comme des sources lumineuses, comportant :
-- un montage série (6-1 à 6-n) comportant l'ensemble des charges comme des sources lumineuses, à alimenter, ainsi que un circuit de pilotage (8) capable de déterminer le courant traversant le montage série entre une première et une seconde polarités d'une source d'alimentation électrique ;
-- pour au moins une charge comme une source lumineuse du montage série, un circuit de dérivation (7-2 à 7-n) connecté entre une première borne de ladite source lumineuse du montage série et une autre borne de la source d'alimentation électrique.

## Description

La présente invention concerne un dispositif de contrôle d'une pluralité de sources lumineuses. Elle concerne aussi un dispositif d'éclairage et/ou de signalisation de véhicule incorporant un tel dispositif de contrôle. Elle trouve application dans le domaine de l'éclairage de véhicule ou encore de signalisation de véhicule.

Dans l'état de la technique, il est connu de disposer plusieurs sources lumineuses et de contrôler leur alimentation électrique de façon à ce que l'éclairement produit par chaque source lumineuse puisse être contrôlé. Par exemple, il est possible de n'allumer qu'une partie des sources lumineuses associées dans un feu ou dans un projecteur, dans le but d'assurer plusieurs fonctions à partir de mêmes sources lumineuses. Puis, ultérieurement, une autre partie des sources lumineuses associées dans le feu ou dans le projecteur est à son tour allumée. À cette fin, il est connu de disposer un circuit de pilotage en relation avec chacune des sources lumineuses et que de connecter le circuit de pilotage à un circuit de contrôle qui produit un signal de commande du changement d'état de la source lumineuse connectée sur le circuit de pilotage contrôlé.

Lorsque, dans un feu ou dans un projecteur, plusieurs sources lumineuses, comme une diode électroluminescente, par exemple douze diodes, sont prévues, il faut aussi prévoir le même nombre de circuits de pilotage, douze circuits de pilotage ici. Il en résulte une augmentation du coût de la fonction. Par ailleurs, si dans un mode de fonctionnement le plus fréquent, toutes les sources ne sont pas allumées, un certain nombre de circuits de pilotage ne présentent une utilité que pendant une durée plus faible que ceux de la fonction la plus fréquente.

Le même problème se pose dans d'autres circonstances, avec des charges pouvant coopérer dans l'exécution d'une mission particulière. De telles charges peuvent être constituées, par exemple, par des moteurs électriques ou par des consommateurs de courant continu qui sont, séquentiellement ou non, commandés en fonctionnement.

La présente invention propose un dispositif de contrôle d'une pluralité de charges, comme des sources lumineuses, qui évite des inconvénients précités.

En effet, le dispositif de l'invention comporte :
-- un montage série comportant l'ensemble des charges comme des sources lumineuses à alimenter, ainsi que un circuit de pilotage capable de déterminer le courant traversant le montage série entre une première et une seconde polarités d'une source d'alimentation électrique ;
-- pour au moins une charge comme une source lumineuse du montage série, un circuit de dérivation connecté entre une première borne de ladite source lumineuse du montage série et une autre borne de la source d'alimentation électrique.

Selon un aspect de l'invention, le circuit de pilotage est disposé au point chaud du montage série.

Selon un aspect de l'invention, le circuit de pilotage est disposé au point froid du montage série.

Selon un aspect de l'invention, le circuit de pilotage comporte une impédance comme une résistance.

Selon un aspect de l'invention, le circuit de pilotage comporte un régulateur de courant selon une architecture SEPIC.

Selon un aspect de l'invention, le circuit de pilotage comporte un régulateur de courant selon une architecture BOOST.

Selon un aspect de l'invention, le circuit de dérivation comporte un moyen pour détecter au moins une source de tension d'alimentation de façon à activer ou à désactiver au moins une partie des charges du montage série.

Selon un autre aspect de l'invention, le circuit de dérivation comporte un moyen pour détecter un signal de commande de l'activation, respectivement de la désactivation, d'au moins une partie des charges du montage série.

L'invention concerne aussi un dispositif d'éclairage et ou de signalisation de véhicule incorporant un dispositif de contrôle.

Selon un aspect de l'invention, le dispositif d'éclairage et ou de signalisation comporte un moyen pour produire une activation, respectivement une désactivation, séquentielle des divers groupes de sources lumineuses contrôlés par le dispositif de contrôle.

D'autres caractéristiques et avantages de la présente invention seront mieux compris à l'aide de la description et des figures annexées parmi lesquels :
-- la figure 1 représente un schéma de dispositif de contrôle selon l'état de la technique ;
-- la figure 2 représente un schéma d'un premier mode de réalisation d'un dispositif de contrôle selon l'invention ;
-- la figure 3 représente un schéma d'un second mode de réalisation d'un dispositif de contrôle selon l'invention ;
-- la figure 4 représente un schéma d'un troisième mode de réalisation d'un dispositif de contrôle selon l'invention ;
-- la figure 5 représente un schéma d'un quatrième mode de réalisation d'un dispositif de contrôle selon l'invention ;
-- la figure 6 représente un schéma d'un cinquième mode de réalisation d'un dispositif de contrôle selon l'invention ;
-- la figure 7 représente un schéma d'un sixième mode de réalisation d'un dispositif de contrôle selon l'invention ; et
-- la figure 8 représente un schéma d'un septième mode de réalisation d'un dispositif de contrôle selon l'invention.

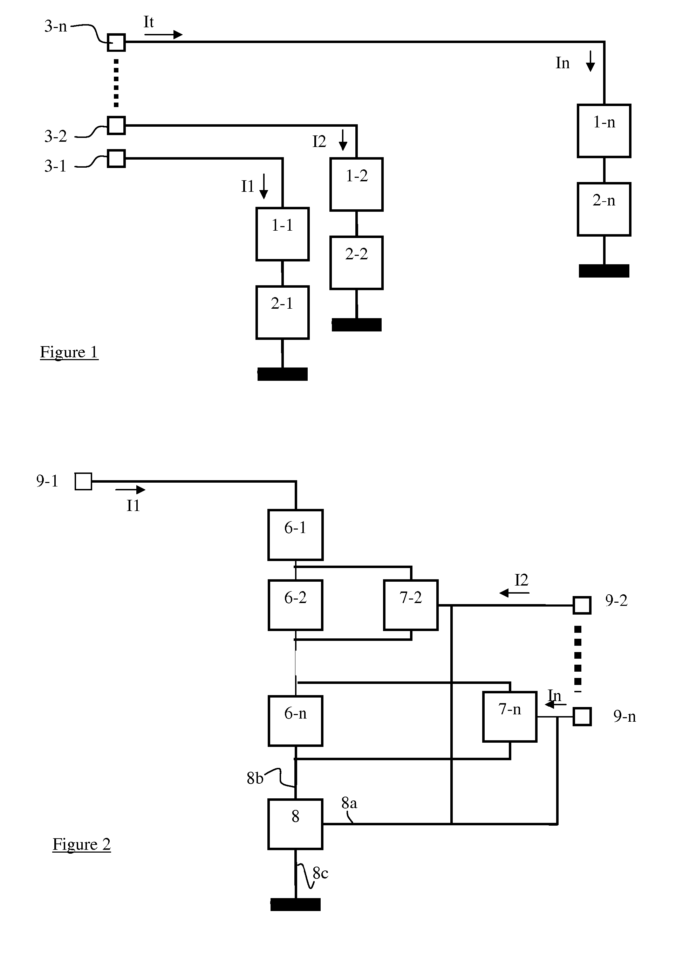

À la figure 1 , on a représenté un schéma d'un dispositif de contrôle de l'activation et de la désactivation de charges électriques des sources lumineuses utilisé actuellement pour l'éclairage ou la signalisation à bord d'un véhicule. Chaque source lumineuse 1-1, 1-2, ... 1-n est connectée en série avec un circuit ou dispositif permettant de contrôler le courant respectivement I1, I2, ..., In traversant la charge correspondante. À la figure 1, le dispositif de contrôle du courant est connecté au point froid de l'alimentation électrique de chaque source lumineuse. Chaque source lumineuse est par ailleurs alimentée par sa propre source d'alimentation à laquelle elle est connectée par les points de connexion 3-1, 3-2, ... 3-n. Chaque source d'alimentation délivre un courant seulement lorsque la fonction d'éclairage ou de signalisation doit être activée au niveau de la source lumineuse concernée. Chaque source d'alimentation est placée au potentiel du point froid lorsque la fonction d'éclairage ou de signalisation doit être désactivée au niveau de la source lumineuse concernée.

Il est ainsi connu d'alimenter progressivement une à plusieurs charges comme des sources lumineuses en fonction de la progression d'une séquence d'éclairage ou de signalisation dans un même feu ou projecteur selon qu'il s'agit de signalisation ou d'éclairage. Il est ainsi possible de réaliser un faisceau optique d'éclairage ou de signalisation selon des diagrammes directionnels d'intensité ou de répartition spectrale selon des fonctions déterminées.

Ainsi qu'il a été décrit ci-dessus pour remédier aux inconvénients de ce genre de schéma, l'invention concerne et présente un dispositif qui, dans un premier mode de réalisation, a été représenté à la figure 2.

À la figure 2, on a représenté un mode de réalisation dans lequel le dispositif de pilotage 8 du montage série comportant l'ensemble des sources lumineuses 6-1,6-2, ..., 6-n est disposé au point froid de l'alimentation électrique principale appliquée au point de connexion 9-1, entre la masse électrique et la borne correspondante de la charge ou source lumineuse 6-n. Chaque source ou groupe de sources 6-2, 6-n peut-être placée en dérivation à l'aide d'un circuit de dérivation 7-2,... 7-n de sorte que le courant principal appliqué à la borne 9-1 pour activer la fonction associée à la source 6-1 puisse s'écouler directement vers le dispositif de pilotage 8, puis le point froid de la source d'alimentation comme la masse électrique locale.

Dans ce mode de réalisation, la commutation de chacun source lumineuse ou groupe de sources lumineuses est directement exécutée par l'application d'une source d'alimentation sur les points de connexion 9-2, ..., 9-n. Dans ce but, chaque circuit de dérivation 7-2, ..., 7-n comporte une borne de commande adaptée à recevoir la tension et le courant I2,..., In provenant des points de connexion 9-2, ..., 9-n. Lorsque la tension appliquée, par exemple au point de connexion 9-2, s'élève au-dessus du point froid et que le courant 12 circule depuis le point de connexion 9-2 jusqu'à l'entrée du circuit de dérivation 7-2, le circuit de dérivation 7-2 commute et passe à l'état bloqué de sorte que la charge comme la source lumineuse 6-2 ne soit plus placée en dérivation. Le courant 11 traverse la charge 6-1 et la charge 6-2 en série, puis chacune des autres dérivations appliquées par les circuits de dérivation 7-3,..., 7-n, jusqu'au dispositif de pilotage 8.

Il est ainsi possible de placer dans n'importe quel ordre arbitraire l'une ou l'autre des sources lumineuses ou groupe de sources lumineuses en activité. Cette possibilité reste ouverte en commandant à l'aide d'un calculateur traditionnel chacune des bornes d'alimentation 9-1,..., 9-n. II suffit donc de modifier la charge qui était autrefois présentée au calculateur selon le circuit de la figure 1 dans le circuit représenté à la figure 2.

Le circuit de pilotage 8 comporte par ailleurs une borne de commande 8a qui permet de modifier la chute de tension appliquée aux bornes 8b et 8c de sorte que la tension correcte est appliquée aux bornes du montage série 6-1,... , 6-n en fonction du nombre de charges comme des sources lumineuses qui sont activées réellement. Dans ce but, chacun des points de connexion 9-2 à 9-n est aussi connecté à la borne de commande 8a du dispositif de pilotage qui peut être réalisé d'une manière connue.

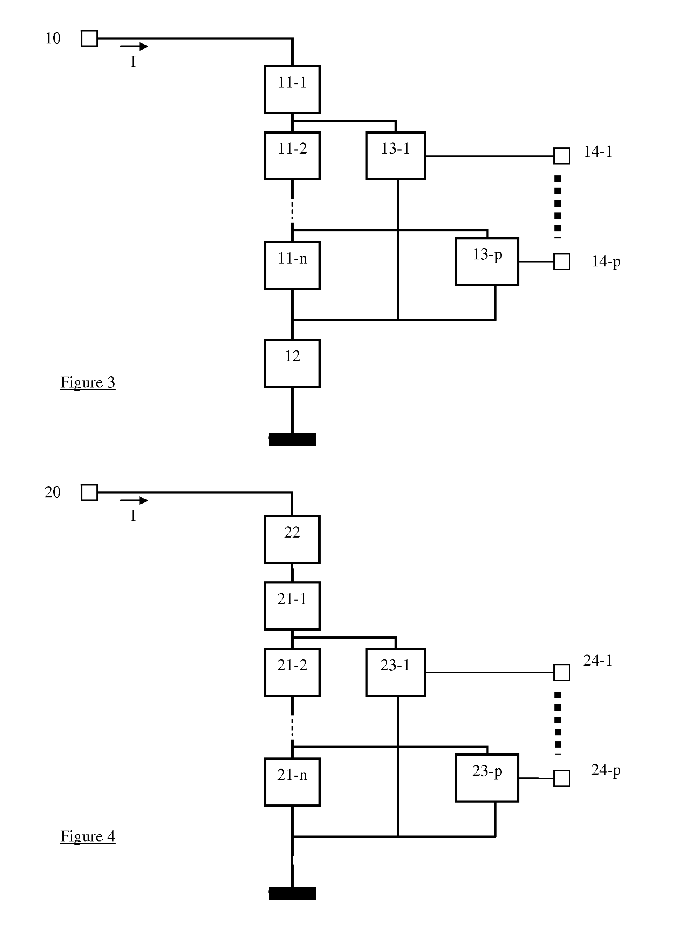

A la figure 3, on a représenté un mode de réalisation de l'invention dans lequel le montage série est composé d'un montage série de sources lumineuses 11-1 à 11-n alimenté par une source d'alimentation (non représentée) appliquée à une borne de connexion 10 et un circuit de pilotage 12 relié par ailleurs à la masse électrique. Dans le mode de réalisation de la figure 3, des circuits de dérivation 13-1 à 13-p sont connectés entre le point d'accès au circuit de pilotage 12 et le point de connexion de chaque charge ou groupe de charges 11-2 à 11-n. De plus, chaque circuit de dérivation comporte une borne de commande qui est connectée à un point de connexion 14-1 à 14-p. Un signal de commande produit par un contrôleur (non représenté) du montage série 11-2 à 11-n est appliqué à l'une ou moins des bornes de commande 14-1 à 14-p selon la charge 11-2 à 11-n qui doit être activée en série. En l'absence de signal de commande sur sa borne de commande 14-1, le dispositif de dérivation 13-1 est passant de sorte que le courant est issu de la première charge 11-1, si la borne 10 est traversée par un courant I issu de la source d'alimentation activée lorsque la première charge 11-1, comme une source lumineuse, est activée, et ainsi de suite pour les p-1 dispositifs de dérivation suivants. D'après le mode de réalisation de la figure 3, toutes les bornes de sortie de courant des dispositifs de dérivation sont connectées sur la borne d'entrée de courant du dispositif de pilotage 12, placé au point froid de l'alimentation électrique.

II en résulte que au fur et à mesure de l'allumage des bornes de commande des dispositifs de dérivation 14-1 à 14-p, les dispositifs de dérivation 13-1 à 3-p sont successivement ouverts et les charges ou groupes de charges 11-2 à 11-n du montage série sont alors séquentiellement alimentés par la source d'alimentation (non représentée) connectée à la borne 10 d'alimentation en courant I, régulé par le circuit de pilotage 12 connecté avec le montage série au point froid de l'alimentation (du côté de la masse).

A la figure 4, on a représenté un circuit composé d'une borne de connexion 20 à une source d'alimentation non représentée qui débite un courant 1 à travers un circuit de pilotage 22 connecté au point chaud du montage série composé des charges électriques 21-1 à 21-n. Les dispositifs de dérivation 23-1 à 23-p sont connectés de la manière décrite à l'aide de la figure 3 et sont commandés à l'aide de bornes de commande 24-1 et à 24-p qui ne seront pas décrites plus avant. Dans ce mode de réalisation, le circuit de pilotage 22 n'est pas placé au point froid du montage série des charges, mais à son point chaud. Il est adapté en conséquence selon les connaissances de l'homme de métier.

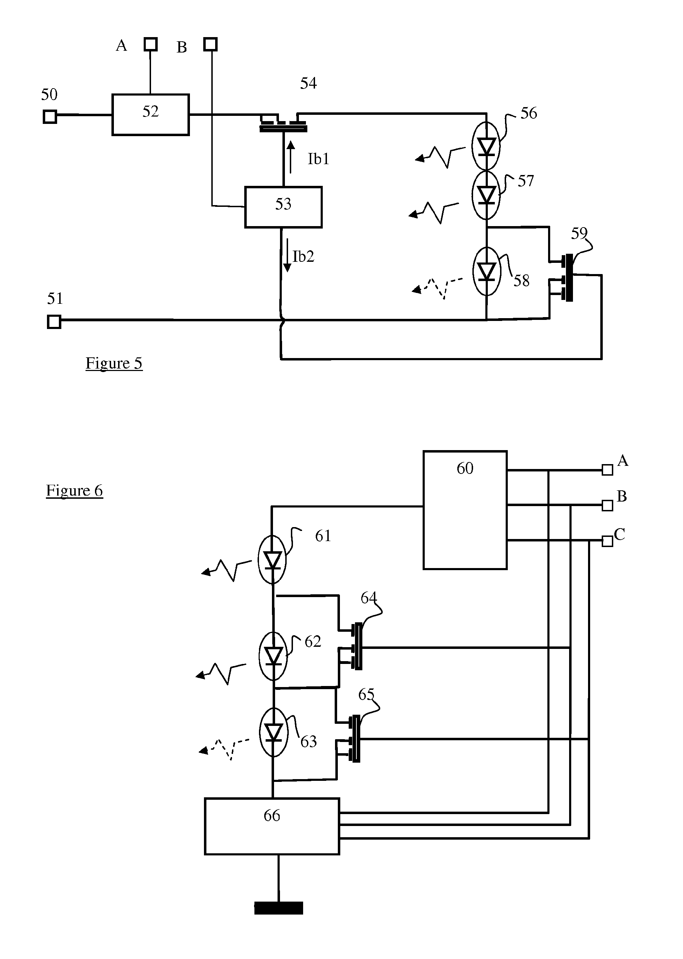

À la figure 5, on a représenté un autre mode de réalisation du dispositif de l'invention dans le cas d'un système d'éclairage ou de signalisation automobile comportant trois diodes électroluminescentes 56, 57 et 58. La diode 58 peut-être court-circuitée par un dispositif de dérivation composé essentiellement d'un transistor de puissance à effet de champs 59. Le circuit de l'invention comporte par ailleurs une borne d'alimentation positive 50 connectée par exemple à la borne positive de la batterie du véhicule et une borne 51 d'alimentation négative, connectée préférentiellement à la borne négative de la batterie du véhicule et à la masse du véhicule.

Un circuit de pilotage 52 comporte une borne de commande A qui reçoit un signal d'activation qui a fait entrée en fonction lorsque le calculateur de contrôle du fonctionnement du feu ou projecteur, composé des diodes électroluminescentes 56 à 58, décide l'allumage des sources lumineuses 56, 57. Dans ce cas, un circuit de pilotage 53 convenablement alimenté de manière non représentée au schéma de la figure de produits un courant de polarisation de la grille d'un transistor de puissance 54 de façon à lui permettre de délivrer un courant suffisant pour la production du flux lumineux prédéterminé par les diodes électroluminescentes 56, 57 tandis que le courant qui les traverse circule sur le chemin drain-source du transistor 59 servant de circuit de dérivation. La troisième diode 58 n'est pas alors allumée. À une borne de commande B du circuit de l'invention, le calculateur de contrôle de fonctionnement du feu ou projecteur, composé des diodes électroluminescentes 56 à 58, décide de l'allumage supplémentaire de la diode 58.

Le circuit de pilotage 53 comporte ensuite une borne de sortie qui produit un courant de polarisation ld2 qui permet d'ouvrir le chemin de connexion de source du transistor de puissance 59 servant de dispositif de dérivation de la diode électroluminescente 58. II en résulte que le courant circulant à travers les diodes montées en série 56, 57, et maintenant 58, est dimensionné de manière à permettre aussi l'allumage de la diode 58.

Dans un mode particulier de réalisation, le circuit de pilotage 53 est aussi construit de manière à produire un courant de polarisation Ib1 pour le transistor de puissance 54 permettant au transistor de faire circuler un courant suffisamment élevé dans le montage série constitué des trois diodes électroluminescentes pour lui permettre de conserver la densité de flux désirée au niveau du feu ou projecteur.

A la figure 6, on a un mode de réalisation de l'invention dans lequel le circuit de pilotage 66 est connecté au point froid de l'alimentation, tandis que les trois tensions provenant d'un source d'alimentation A, B, C est transmis à un circuit d'adaptation 60 qui est connecté au montage série composé des diodes électroluminescentes 61, 62 et 63. À titre de dispositif de dérivation, on a prévu des transistors de puissance 64 et 65, dont les grilles sont connectées respectivement à la borne d'alimentation B. et à la borne d'alimentation C, de sorte que lorsque l'une ou l'autre des sources d'alimentation B et/ou C est activée, le transistor de puissance correspondant est ouvert de sorte que le courant circule à travers la diode correspondante 62 et/ou 63. De même, les courants appelés sur chacune des sources d'alimentation A, B et C en fonction de leurs états d'activité sont renvoyés à des entrées convenables permettant de configurer le circuit driver ou de pilotage 66 en fonction de la puissance prélevée pour l'allumage des diodes 61, 62 et/ou 63.

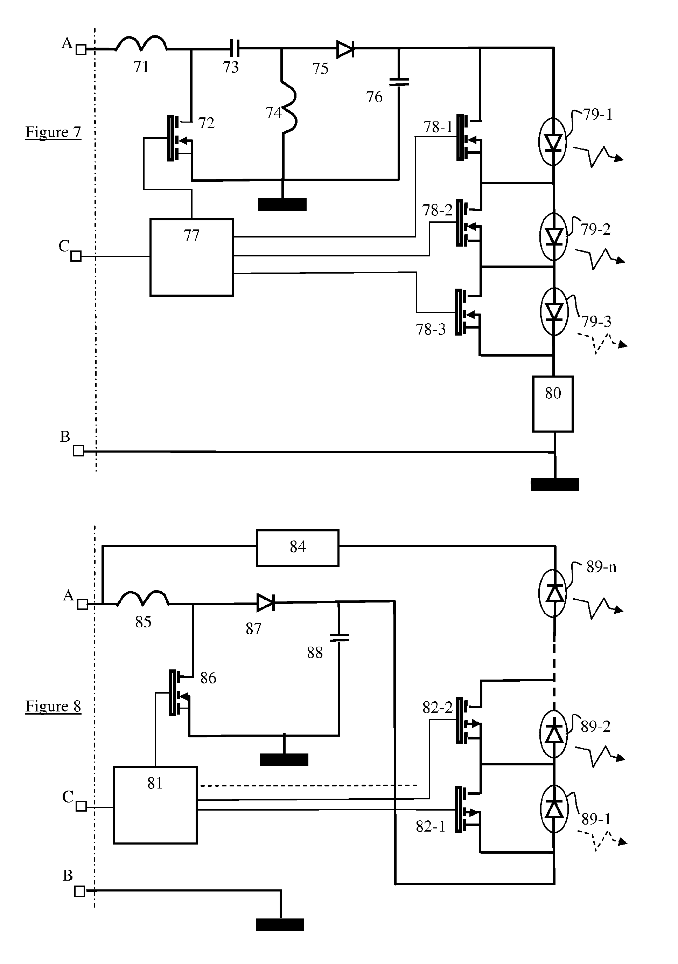

À la figure 7, on a représenté un mode particulier de réalisation de l'invention dans lequel le circuit de pilotage comporte du côté du point chaud un convertisseur 71-76 selon une architecture SEPIC (abbréviation du terme anglais « Single Ended Primary Inductor Converter »), qui est fondée sur un convertisseur selon l'une des trois architectures des alimentations à découpage. Dans le mode de réalisation de la figure 7, deux inductances 71 et 74 sont couplées magnétiquement, , l'inductance 71 étant connectée d'une part à la borne d'alimentation de la source électrique A et d'autre part à une borne d'un transistor de puissance 72 connecté par une autre borne de son chemin principal de courant à la masse électrique locale, et à un condensateur 73. L'inductance 74 est connectée en parallèle avec la boucle constituée du condensateur 73 et du transistor 72. Le point commun entre l'inductance 74 et le condensateur 73 est connecté à l'anode d'une diode de roue libre 75. La cathode de la diode 75 est connectée à un condensateur de charge 76. Le condensateur de charge 76 est connecté au point commun entre la masse électrique locale, l'inductance 74 et la source du transistor de puissance 72.

La sortie du convertisseur 71-76 est connectée au montage série constitué par trois sources lumineuses, composées chacune d'une diode électroluminescente 79-1 à 79-3. Enfin, une résistance de tirage 81 est connectée en sortie du montage série avec la masse électrique du véhicule et la borne négative d'alimentation de batterie B.

Par ailleurs, chaque charge 79-1 à 79-3 est montée en parallèle avec le chemin drain source d'un transistor de puissance 78-1 à 78-3 qui sert de dispositif de dérivation selon l'invention. Les grilles des transistors constituant les dispositifs de dérivation selon l'invention, sont par ailleurs connectées en sortie de commande d'un dispositif 77 tampon qui est connecté à une borne C d'entrée d'un mot série de commande d'état d'allumage des diodes électroluminescentes. De plus, en fonction du nombre de diode allumées, une borne de sortie du dispositif tampon 77 est connectée à la grille du transistor 72 du convertisseur SEPIC précité.

A la figure 8, on a représenté un autre mode de réalisation d'un circuit de pilotage selon l'invention et qui comporte un régulateur de courant selon une architecture BOOST. Le convertisseur de type BOOST comporte une inductance 85 connectée entre l'entrée A de tension positive continue du dispositif de contrôle de l'invention, et la connexion de drain d'un transistor MOS de puissance de type N 86. Cette connexion est reliée par une diode de roue libre 87 à un condensateur 88 en parallèle entre la cathode de la diode 87 et un point commun de la masse du convertisseur BOOST et de la source du transistor 86. La grille du transistor MOS 86 est connectée à un port de sortie d'un microcontrôleur 81, par exemple de type à modulation en largeur d'impulsion PWM selon un taux de conduction déterminant la valeur instantanée du courant traversant le chemin drain-source du transistor 86 convenablement détecté à l'aide d'une résistance non représentée de mesure de ce courant détecté par un port d'entrée (non représenté) du microcontrôleur 81.

Le point commun de sortie du courant régulé du convertisseur BOOST est connecté à l'anode d'une première diode 89-1 d'une série de diodes électrolumineuses 89-1, ..., 89-n, la cathode de la dernière diode 89-n de la série étant connectée par une résistance 84 à la borne A de tension positive non régulée, la masse du dispositif de contrôle de l'invention étant connectée par un point de connexion B à la tension négative d'alimentation.

Chaque diode 89-1, à 89-n-1 est connectée en dérivation par un transistor MOS de type P 82-1, 82-2, ... de sorte que selon les signaux de commutation appliqués à des ports de sortie convenables du microcontrôleur les diodes 89-1 à 89-n-1 sont allumées ou non allumées en même temps que la diode 89-n qui est activée dès que le convertisseur BOOST est activé.

La commutation des diodes électroluminescentes 89-1 à 89-n est déterminée par un mode de commande de type série transmis à un port d'entrée, comme un port SPI du microcontrôleur 81 qui exécute alors un programme prédéterminé pour :
- déterminer les diodes qui doivent être allumées par commutation des transistors 82-1, 82-2, ... et/ou ;
- déterminer la valeur de réglage du courant régulé qui doit traverser la série de diodes 89-1 à 89-n pour déterminer notamment le flux lumineux nécessaire aux diverses fonctions d'éclairage, ou de signalisation, selon le cas, commandées par le mot de commande appliqué au point d'accès C.

Un autre mode de commande peut utiliser un port SPI du micro contrôleur 81 ou une activation de plusieurs entrées du micro contrôleur, qui exécutent alors un programme déterminé pour déterminer les diodes et la valeur de réglage du courant mentionnées ci-dessus.
Dans un mode de réalisation, qui peut être combiné avec n'importe lequel des modes de réalisation précités, les sources électriques comme des diodes électroluminescentes pour un feu de signalisation ou un projecteur d'éclairage, coopèrent avec au moins un capteur de détection de défaut, comme un capteur de température.

Si le capteur de défaut est actif parce qu'un défaut apparaît, par exemple lorsque la température de travail d'une diode déterminée, ou de l'ensemble du feu ou du projecteur, il produit un signal de passage en mode dégradé à un contrôleur du dispositif de pilotage de l'invention, comme les microcontrôleurs 77 ou 81 des figures 7 ou 8. En réponse, le microcontrôleur exécute alors un programme prédéterminé délestant l'ensemble ou une partie des charges électriques comme des sources lumineuses, notamment en refermant tout ou partie des moyens de dérivation des charges. Bien entendu, quand la série de charges électriques exécute plusieurs fonctions comme des fonctions d'éclairage ou de signalisation, au moins une fonction de mode dégradé est alors déterminée et exécutée. Si une certaine durée d'exécution est écoulée, par mesure locale sur le microcontrôleur du dispositif de contrôle de l'invention, et/ou que le signal de détection de défaillance retombe à un état inactif, les autres fonctions sont alors restaurées.

L'invention est particulièrement utilisée avec des feux ou projecteurs équipés d'au moins deux diodes électroluminescentes. Elle est aussi utilisée lorsque au moins de l'une des charges est constituée par une lampe d'éclairage comme une lampe halogène. Bien entendu, le circuit de pilotage (driver) est alors adapté selon la nature des charges du montage série.

## Revendications

1. - Dispositif de contrôle d'une pluralité de charges, comme des sources lumineuses, **caractérisé en ce qu'**il comporte :
-- un montage série (6-1 à 6-n) comportant l'ensemble des charges comme des sources lumineuses, à alimenter, ainsi que un circuit de pilotage (8) capable de déterminer le courant traversant le montage série entre une première et une seconde polarités d'une source d'alimentation électrique ;
-- pour au moins une charge comme une source lumineuse du montage série, un circuit de dérivation (7-2 à 7-n) connecté entre une première borne de ladite source lumineuse du montage série et une autre borne de la source d'alimentation électrique.

2. - Dispositif selon la revendication 1 , **caractérisé en ce que** le circuit de pilotage (22) est disposé au point chaud du montage série.

3. - Dispositif selon la revendication 1 , **caractérisé en ce que** le circuit de pilotage (12) est disposé au point froid du montage série.

4. - Dispositif selon les revendications 2 ou 3, **caractérisé en ce que** le circuit de pilotage comporte une impédance comme une résistance (80).

5. - Dispositif selon l'une quelconque des revendications 2 à 4, **caractérisé en ce que** le circuit de pilotage comporte un régulateur de courant selon une architecture SEPIC (71 - 77).

6. - Dispositif selon l'une quelconque des revendications 2 à 4, **caractérisé en ce que** le circuit de pilotage comporte un régulateur de courant selon une architecture BOOST (84 - 88).

7. - Dispositif selon la revendication 1 , **caractérisé en ce que** le circuit de dérivation comporte un moyen pour détecter au moins une source de tension d'alimentation (9-2 à 9-n) de façon à activer ou à désactiver au moins une partie des charges du montage série.

8. - Dispositif selon la revendication 1 , **caractérisé en ce que** le circuit de dérivation comporte un moyen pour détecter un signal de commande de l'activation (14-1 à 14-p), respectivement de la désactivation, d'au moins une partie des charges du montage série.

9. - Dispositif selon l'une quelconque des revendications précédentes, **caractérisé en ce que** les sources électriques coopèrent avec au moins un capteur de détection de défaut, comme un capteur de température, connecté à un mircrocontrôleur (77 ; 8), qui produit un ordre de délestage de l'ensemble ou d'une partie des charges électriques notamment pour exécuter au moins une fonction de mode dégradé exécutée pendant une certaine durée d'exécution et/ou pendant que le signal de détection de défaillance retombe à un état inactif, les autres fonctions étant alors restaurées.

10. - Dispositif d'éclairage et ou de signalisation de véhicule incorporant un dispositif de contrôle selon l'une quelconque des revendications précédentes.

11. - Dispositif selon la revendication 10, **caractérisé en ce que** l'une des charges comporte au moins une diode électroluminescente.

12. - Dispositif selon l'une quelconque des revendications 10 ou 11, **caractérisé en ce que** l'une des charges comporte au moins une lampe d'éclairage.
